Europäisches Patentamt

European Patent Office

Office européen des brevets

(19)

(11) Numéro de publication : **0 410 849 B1**

(12) **FASCICULE DE BREVET EUROPEEN**

(45) Date de publication du fascicule du brevet :
**29.12.93 Bulletin 93/52**

(51) Int. Cl.⁵ : **C10M 135/02, C10M 135/06, C07G 17/00**

(21) Numéro de dépôt : **90402068.2**

(22) Date de dépôt : **18.07.90**

(54) **Compositions polysulfurées de corps gras insaturés, et/ou d'esters d'acides (poly)insaturés et éventuellement d'oléfines, leur préparation et leur utilisation comme additifs pour lubrifiants.**

(30) Priorité : **27.07.89 FR 8910286**

(43) Date de publication de la demande :
**30.01.91 Bulletin 91/05**

(45) Mention de la délivrance du brevet :
**29.12.93 Bulletin 93/52**

(84) Etats contractants désignés :
**BE CH DE DK ES FR GB GR IT LI LU NL SE**

(56) Documents cités :
**FR-A- 2 605 328
FR-A- 2 636 070
US-A- 4 149 982**

(72) Inventeur : **Born, Maurice**
**72, rue du Vieux Pont**
**F-92000 Nanterre (FR)**
Inventeur : **Briquet, Lucienne**
**26, avenue de la République**
**F-92500 Rueil Malmaison (FR)**
Inventeur : **Lallement, Jacques**
**84, 86, Boulevard Félix Faure**
**F-93300 Aubervilliers (FR)**
Inventeur : **Parc, Guy**
**27, rue du Chateau**
**F-92500 Rueil Malmaison (FR)**

(74) Mandataire : **Andreeff, François et al**
**INSTITUT FRANCAIS DU PETROLE 4, avenue**
**de Bois-Préau**
**F-92502 Rueil-Malmaison (FR)**

(73) Titulaire : **INSTITUT FRANCAIS DU PETROLE**
**4, Avenue de Bois Préau**
**F-92506 Rueil-Malmaison Cédex (FR)**

EP 0 410 849 B1

## Description

L'invention concerne des additifs organiques sulfurés utilisés notamment pour améliorer les propriétés antiusure et extrême-pression des lubrifiants; elle concerne plus particulièrement de nouveaux corps gras insaturés, esters d'acides (poly)insaturés et oléfines polysulfurés à teneur en soufre élevée, peu odorants, à très faible teneur en chlore, à faible coloration et à stabilité au stockage élevée, leur préparation et leur utilisation comme additifs pour lubrifiants minéraux ou synthétiques.

La sulfuration des corps gras insaturés et des esters d'acides (poly)insaturés, en présence ou non d'oléfines, est généralement réalisée dans l'art antérieur par chauffage direct avec du soufre élémentaire (brevets des Etats-Unis US-A-3.850.825, 4.031.019, 4.149.982, 4.188.300 et 4.321.153), et parfois même en complètant cette sulfuration directe par un traitement supplémentaire au chlorure de soufre (par exemple le brevet des Etats-Unis US-A-3.740.333).

Les inconvénients majeurs de ces procédés de sulfuration sont de conduire à des produits toujours très fortement colorés, souvent instables au stockage avec libération progressive d'$H_2S$, et, dans le cas de la sulfuration par les chlorures de soufre, de générer des produits contenant des quantités de chlore incompatibles avec les nouvelles contraintes toxicologiques qui orientent une future législation, en matière d'additifs pour lubrifiants, imposant dans un avenir très proche une teneur maximale en chlore sensiblement inférieure à 0,1 % en masse dans les produits industriels.

La demanderesse à déjà décrit dans la demande de brevet français FR-A-2.636.070, publiée le 9 mars 1990, un procédé de préparation de composition d'oléfines polysulfurées qui comprend:

- une étape (1) dans laquelle on fait réagir au moins un composé choisi parmi le monochlorure et le dichlorure de soufre avec au moins une monooléfine aliphatique de 2 à 12 atomes de carbone, formant ainsi un adduct ;
- une étape (2) dans laquelle on fait réagir de l'hydrogène sulfuré et au moins un mercaptan avec un hydroxyde de métal alcalin ou d'ammonium en solution dans au moins un monoalcool aliphatique de 1 à 4 atomes de carbone, substantiellement anhydre, obtenant ainsi une solution alcoolique ;
- une étape (3) dans laquelle on met en contact ledit adduct obtenu à l'étape (1) avec la solution alcoolique obtenue à l'étape (2) ;
- une étape (4) dans laquelle on chauffe le mélange résultant puis on élimine le monoalcool aliphatique par distillation, tout en ajoutant une quantité d'eau suffisante pour maintenir en solution les réactifs sulfurés éventuellement en excès et les produits minéraux formés au cours de la réaction ; et
- une étape (5) dans laquelle on élimine la phase aqueuse et on récupère la phase organique constituée principalement par la composition d'oléfine polysulfurée.

Ce procédé utilise comme produits de départ des monooléfines de 2 à 12 atomes de carbone ; il permet de préparer des compositions polysulfurées à teneur élevée en soufre et à faible teneur en chlore, utilisables comme additifs antiusure et extrême-pression dans les huiles lubrifiantes minérales ou synthétiques, employées notamment dans la lubrification des engrenages et dans le travail des métaux.

On a maintenant découvert qu'il était possible de sulfurer les corps gras insaturés et/ou les esters d'acides carboxyliques (poly)insaturés, en présence ou non d'oléfines, et d'obtenir des produits renfermant des teneurs en soufre élevées bien que peu odorants, de faible teneur en chlore ; ces produits étant par ailleurs peu colorés, stables au stockage, solubles dans les huiles minérales selon les conditions de synthèse, et utilisables comme additifs antiusure et extrême-pression ; la sulfuration étant réalisée par un procédé analogue à celui décrit dans la demande FR-A-2.636.070.

D'une manière générale, les compositions polysulfurées de l'invention peuvent être définies comme consistant en les produits obtenus par un procédé qui comprend :

- une étape (1) dans laquelle on fait réagir, par exemple à une température de 20 à 80°C, au moins un corps gras insaturé et/ou au moins un ester d'acide carboxylique (poly)insaturé, en présence ou non d'une monooléfine aliphatique de 2 à 36 atomes de carbone, avec, en une ou plusieurs fractions, au moins un composé choisi parmi le monochlorure et le dichlorure de soufre, formant ainsi un produit d'addition ou "adduct" ;
- une étape (2) dans laquelle on fait réagir, par exemple à une température de 20 à 80°C, de l'hydrogène sulfuré et/ou un mercaptan avec un hydroxyde de métal alcalin sodium ou potassium) ou d'ammonium, en solution dans au moins un monoalcool aliphatique de $C_1$ à $C_4$ substantiellement anhydre ; on ajoute éventuellement du soufre élémentaire selon les proportions de sulfure, d'hydrogènosulfure, de mercaptate, de polysulfure et/ou de mercaptate polysulfure de métaux alcalins que l'on désire obtenir dans le mélange ;
- une étape (3) dans laquelle on met en contact ledit adduct et éventuellement au moins un composé hydrocarboné monohalogèné, saturé ou insaturé, tel que défini plus loin, avec, en une ou plusieurs fractions, la solution alcoolique obtenue à l'issue de l'étape (2), maintenue à une température déterminée, par exemple de 20 à 70°C, pendant l'introduction des réactifs ;

- une étape (4) dans laquelle on chauffe le mélange résultant pendant un temps déterminé, à une température par exemple allant 40 à 70°C, on élimine le monoalcool par distillation, tout en ajoutant un volume d'eau suffisant pour maintenir en solution les produits minéraux formés au cours de la réaction et éventuellement les réactifs sulfurés en excès, et on ajoute éventuellement un solvant hydrocarboné, en particulier aromatique, tel que par exemple le toluène ou un xylène (il sera éliminé après décantation par distillation au cours de l'étape suivante ;

- une étape (5) dans laquelle après décantation, on élimine la phase aqueuse et on récupère la composition polysulfurée constituant la phase organique ; et éventuellement

- une étape (6) dans laquelle on met en contact le produit obtenu avec un composé faiblement basique tel que le bicarbonate de sodium, et on le lave à l'eau.

Das l'étape (1) du procédé de préparation des compositions de l'invention, les corps gras utilisés peuvent être d'origine animale, comme par exemple les suifs, le saindoux, le beurre, les huiles de poissons et de mammifères marins, etc. Mais ils peuvent aussi être d'origine végétale, comme par exemple les huiles de colza, de tournesol, de palme, de palmiste, de ricin, de coprah, d'amande, d'olive, d'arachide, de sésame, de maïs, de coton, de soja, de limnanthe, de jojoba, etc.

Les acides carboxyliques (poly)insaturés utilisés pour la préparation des esters peuvent contenir jusqu'à environ 26 atomes de carbone par molécule.

Les alcools saturés ou insaturés utilisés pour préparer les esters d'acides carboxyliques mono et/ou polyinsaturés sont des alcools primaires ou secondaires, ramifiés ou linéaires, d'origine naturelle ou synthétique, contenant environ 1 à 20 et de préférence de 1 à 16 atomes de carbone par molécule.

Les oléfines éventuellement utilisées avec les corps gras et/ou les esters d'acides carboxyliques (poly)insaturés peuvent être linéaires ou cycliques et renfermer de 2 à 36, de préférence de 2 à 12, atomes de carbone par molécule.

Les corps gras insaturés, les esters d'acides carboxyliques (poly)insaturés et/ou éventuellement les oléfines sont utilisés globalement dans des proportions correspondant à un nombre d'insaturations de 0,2 et 2,5 insaturations par mole-gramme de monochlorure et/ou de dichlorure de soufre.

Par ailleurs, dans l'ensemble des réactifs insaturés utilisés, les corps gras insaturés et/ou les esters d'alkyle d'acides carboxyliques (poly)insaturés représentent une proportion, exprimée en insaturations éthyléniques, allant de 1 à 100 %, de préférence de 10 à 100 %, les monooléfines aliphatiques représentent une proportion allant de 0 à 99 %, de préférence de 0 à 90 %.

Les chlorures de soufre sont généralement introduits dans le mélange oléfinique à une température de 20 à 80°C, plus spécifiquement de 30 à 50°C.

Le mélange sulfuré préparé dans l'étape (2) à partir d'hydrogène sulfuré et/ou de mercaptan peut avoir les proportions d'un sulfure, d'un hydrogènosulfure, d'un polysulfure, d'un mercaptate ou d'un mercaptate polysulfure de métal alcalin (par exemple sodium ou potassium) ou d'ammonium ou d'un mélange de ceux-ci.

Il s'agit le plus souvent de composés du sodium. On utilise en général de 0,01 de 1 mole-gramme d'hydrogène sulfuré, et de préférence de 0,05 à 0,95 mole-gramme d'hydrogène sulfuré par mole-gramme d'hydroxyde et de 0,01 à 1 mole-gramme de mercaptan et de préférence de 0,05 à 0,95 mole-gramme de mercaptan par mole-gramme d'hydroxyde. Le soufre élémentaire éventuellement mis en jeu dans l'étape (2), conjointement au composé sulfuré, peut être introduit avec l'hydroxyde dans un rapport molaire allant de 0 jusqu'à environ 3, 6/1, plus particulièrement de 0 à 2,5/1.

Dans l'étape (2), on forme le composé sulfuré, et on introduit éventuellement le soufre élémentaire, dans un monoalcool aliphatique léger, renfermant de 1 à 4 atomes de carbone.

Comme monoalcools aliphatiques légers, on peut citer : le méthanol, l'éthanol, le n-propanol, l'isopropanol, le n-butanol, l'isobutanol et le tert-butanol, le méthanol étant préfére ; la quantité mise en jeu est avantageusement de 100 à 1000 cm³, de préférence de 125 à 500 cm³, par mole-gramme d'hydroxyde utilisée.

Par monoalcool substantiellement anhydre, on entend un monoalcool ne contenant pas plus de 5 % en masse d'eau, et de préférence moins de 1 % en masse d'eau.

Dans l'étape (3) du procédé de préparation des compositions polysulfurées de l'invention, la proportion d'adduct et de composé hydrocarboné monohalogéné éventuel utilisée par rapport à l'hydroxyde mis en jeu correspond en général à un nombre d'atomes-gramme d'halogène par mole-gramme d'hydroxyde allant de 1/1 à 0,5/1, de préférence de 0,80/1 à 0,75/1.

Les composés hydrocarbonés monohalogénés que l'on peut mettre en jeu conjointement à l'adduct peuvent consister en des chlorures, des bromures ou des iodures d'alkyles ou d'alkényles, linéaires ou ramifiés, en $C_1$ à $C_{12}$ (de préférence en $C_2$ à $C_4$), des cycloalkyles et/ou cycloalkényles éventuellement substitués, en $C_5$ à $C_{12}$ (de préférence en $C_6$), ou des arylalkyles et/ou arylalkényles, éventuellement substitués, en $C_1$ à $C_{12}$ (de

préférence en $C_8$ et $C_9$).

Il peut encore s'agir de composés hydrocarbonés monohalogénés renfermant un ou plusieurs groupements fonctionnels comportant un ou plusieurs hétéroatomes (tels que l'oxygène et/ou l'azote et/ou le soufre). On utilisera principalement les chlorures et les bromures.

Parmi ces composés fonctionnels, on considère plus particulièrement :

- des composés monohalogénés renfermant au moins une fonction alcool et notamment :
  - des halogénures de monoalcools aliphatiques, alicycliques ou aromatique-aliphatiques renfermant par exemple de 2 à 18 atomes de carbone.
  - des halogénures de polyols ;
  - des halogénures de monoalcools (poly-)oxyalkylénés ;
- des composés monohalogénés renfermant au moins une fonction phénol, éventuellement substitués par exemple par des groupements alkyles ;
- des composés monohalogénés renfermant au moins une fonction carboxylique ;
- des composés monohalogénés, renfermant au moins une fonction amine, notamment des composés aliphatiques, alicycliques ou aromatique-aliphatiques ;
- des composés monohalogénés renfermant au moins une fonction amide ;
- des composés monohalogénés renfermant au moins une fonction thiol ;
- des composés à fonctions hydroxyle et acide carboxylique ;
- des composés à fonctions amine et acide carboxylique ; ou encore
- des composés à fonctions hydroxyle et amine.

Des exemples spécifiques de tels composés monohalogénés fonctionnels ont été donnés dans la demande de brevet français publiée FR-A-2.615.861 portant sur des "compositions d'oléfines polysulfurées à teneur en soufre élevée et à très faible teneur en chlore, leur préparation et leur utilisation comme additifs pour lubrifiants".

La proportion de composé hydrocarboné monohalogéné éventuellement utilisée est en général de 1 à 70 % en atomes-gramme d'halogène par rapport au nombre total d'atomes-gramme d'halogène de l'ensemble adduct + composé hydrocarboné monohalogéné.

L'étape (3) peut être effectuée sous des pression variées ; la pression peut aller par exemple jusqu'à 1 MPa (10 bars).

Les additifs de l'invention peuvent aussi être préparés au moyen d'un procédé fonctionnant en continu à courants parallèles et à contacts multiples. Dans ce cas, la réaction de l'étape (3) est en général effectuée sous pression.

Les compositions polysulfurées selon l'invention peuvent présenter une teneur en soufre allant d'environ 5 à 55 % en masse, pour des teneurs en chlore résiduel particulièrement faibles, généralement inférieures à environ 0,1 % en masse, le plus souvent inférieures à 0,05 %, en particulier dans le cas de l'emploi du méthanol et/ou d'une légère pression réactionnelle.

Les compositions de l'invention sont peu colorées. Leur couleur NF T 60-104 correspond à un nombre allant en général de 1,5 à 3,5. Elles ont une odeur faible, eu égard à leur teneur en soufre. Elles sont solubles dans les solvants aromatiques et dans les huiles lubrifiantes minérales à des concentrations suffisantes pour y exercer un effet notable d'amélioration des propriétés extrême-pression de ces huiles. Elles en améliorent également l'onctuosité. En outre. l'origine naturelle des corps gras utilisés comme réactifs de départ permet d'obtenir des produits soufrés présentant une meilleure biodégradabilité que les produits préparés à partir de réactifs d'origine pétrolière.

Les compositions de l'invention présentent une corrosivité vis-à-vis du cuivre qui, évaluée selon la norme ASTM D 130 (NF M 07-015, 3 heures à 120°C pour une concentration correspondant à une teneur en soufre de 2 % en masse) correspond à une cotation allant en général de 2 c à 4 b.

Celles dont la corrosivité vis-à-vis du cuivre se traduit par une cotation de 3 ou moins, peuvent être utilisées pour la formulation des huiles pour engrenages et pour la formulation des huiles de coupe des métaux cuivreux à des doses comprises entre 0,1 et 20 % en masse. Celles dont la corrosivité vis-à-vis du cuivre, dans les conditions indiquées ci-dessus, se traduit par une cotation supérieure à 3, peuvent être utilisés pour la formulation des huiles de coupe des métaux ferreux à des doses comprises entre 0,1 en 20 % en masse, et comme agents de sulfuration en milieu organique.

Les exemples suivants illustrent l'invention sans la limiter. Dans ces exemples. RSH ou HSR représente le mercaptan utilisé.

-Exemple 1 :    Mélange sulfuré : huile de Ricin/diisobutylène

Dans un réacteur de 1 l, muni d'un agitateur, d'un dispositif de mise au reflux et d'un système de chauffage, on dissout 34,6 g de soude en pastilles (0,865 mole-gramme) dans 600 cm³ d'alcool méthylique anhydre puis, par l'intermédiaire d'une ampoule d'addition, on ajoute 77,85 g de tert-butylmercaptan (0,865 mole-gramme) en 0,5 h. Après réaction on ajoute 13,9 g de soufre en fleur (0,434 atome-gramme) et on chauffe le mélange agité pendant 1 h pour former le mercaptate polysulfure alcalin (dans cet essai le rapport molaire théorique HSR/S est égal à 2). Le mélange ainsi obtenu est transféré dans une ampoule d'addition.

Dans un second réacteur (de 2 l), muni d'un agitateur, d'un réfrigérant et d'un dispositif de chauffage, on introduit 150 g d'huile ricin (environ 0,14 mole-gramme ; masse molaire moyenne de 1086 g calculée à partir d'un indice d'hydroxyle de 185), 75 g de diisobutylène (0,67 mole-gramme), 100 cm³ d'hexane. Le mélange est agité à 20°C puis, par l'intermédiaire d'une ampoule d'addition, on ajoute 58,4 g de $S_2Cl_2$ (0,432 mole-gramme) goutte à goutte en une heure et en maintenant la température réactionnelle inférieure à 35°C.

La solution de mercaptate polysulfure alcalin obtenue précédemment est alors ajoutée goutte à goutte en 2 h au mélange sulfo-halogéné, en maintenant une température réactionnelle inférieure à 35°C.

On chauffe ensuite le mélange ainsi obtenu, pendant 24 h à 50°C et sous agitation.

On ajoute 150 cm³ de toluène, 300 cm³ d'eau puis on élimine le méthanol par distillation sous pression réduite. On élimine ensuite la phase aqueuse par décantation, on lave la phase organique avec trois fois 200 cm³ d'eau, on sèche sur $NaSO_4$ anhydre, on évapore le solvant sous pression réduite à 100°C ; on obtient ainsi 277 g d'une huile jaune clair, limpide, peu visqueuse et dont les caractéristiques physico-chimiques sont les suivantes :

$$S \% \text{ masse} = 20,4 \qquad\qquad Cl \quad = \quad 500 \text{ ppm}$$

$$Na < 2 \text{ ppm}$$

$$\text{Viscosité cinématique à } 100°C \text{ (mm}^2/\text{s)} \quad = \quad 7,2$$

$$\text{Indice de saponification (mg KOH/g)} \quad = \quad 145$$

$$\text{Couleur NF T 60-104} \qquad\qquad\qquad = \quad 2$$

Soluble dans les solvants aromatiques.

Odeur très faible, même après plusieurs mois de stockage.

L'analyse IR du produit indique la présence de bandes OH et C=O caractéristiques.

-Exemple 2 :     Mélange sulfuré huile de colza/diisobutylène

Comme dans l'exemple 1, on prépare une solution de mercaptate polysulfure alcalin en faisant réagir 39,6 g de soude en pastilles (0,99 mole-gramme), 89,2 g de tert-butylmercaptan (0,99 mole-gramme) et 16,7 g de soufre en fleur (0,521 atome-gramme) dans 600 cm³ de méthanol anhydre (dans cet exemple le rapport molaire théorique HSR/S est égal à 1,9).

Dans un second réacteur, on prépare un mélange halogéné en faisant réagir, entre 25 et 30°C, 45,6 g de $S_2Cl_2$ (0,34 mole-gramme) sur un mélange constitué par 56 g de diisobutylène (0,5 mole-gramme) et par 106,3 g d'huile de colza dont l'indice d'iode est égal à 119,3 (soit 0,5 insaturation). On ajoute au mélange obtenu environ 20 % de la solution de mercaptate alcalin précédemment préparée, en maintenant la température réactionnelle vers 30°C.

On introduit ensuire 15,15 g supplémentaires de $S_2Cl_2$ (0,11 mole-gramme), puis le reste de la solution de mercaptate polysulfure alcalin. Le mélange obtenu est alors chauffé sous agitation pendant 24 h à 50°C.

Après réaction on ajoute 200 cm³ d'eau, puis on élimine le méthanol par distillation sous pression réduite. La phase organique récupérée après décantation est lavée avec deux fois 200 cm³ d'un mélange constitué par 150 cm³ d'eau et par 50 cm³ d'eau saturée de NaCl ; après séchage sur $Na_2SO_4$ puis filtration, on récupère 203 g d'une huile jaune clair dont les caractéristiques sont les suivantes :

$$S \% \text{ masse} = 23,2 \qquad Cl \quad = \quad 620 \text{ ppm}$$

$$Na = 115 \text{ ppm}$$

$$\text{Viscosité cinématique à } 100^{\circ}C \ (mm^2/s) \ = \ 27,7$$

$$\text{Indice de saponification (mg KOH/g)} \quad = \quad 214,0$$

$$\text{Couleur NF T 60-104} \qquad = \quad 2,5$$

Soluble dans l'huile 100 neutral solvent et les solvants aromatiques.

-Exemple 3 :       Mélange sulfuré huile de Colza/diisobutylène

L'expérimentation de l'exemple 2 est reprise en utilisant les mêmes quantités d'huile de colza et de diisobutylène, mais en mettant en oeuvre 67,5 g de $S_2Cl_2$ (0,5 mole-gramme), et 35,3 g de soufre en fleur (1,1 atome-gramme) ; dans cet essai le rapport molaire théorique HSR/S est égal à 1).
Après réaction puis traitement, on récupère 246 g d'huile orangée dont l'analyse conduit aux résultats suivants :

$$S \% \text{ masse} = 30,1 \qquad Cl \quad = \quad 440 \text{ ppm}$$

$$Na = 120 \text{ ppm}$$

$$\text{Viscosité cinématique à } 100^{\circ}C \ (mm^2/s) \ = \ 50,9$$

$$\text{Indice de saponification (mg KOH/g)} \quad = \quad 303$$

$$\text{Couleur NF T 60-104} \qquad = \quad 2,5$$

Soluble dans l'huile 100 neutral solvent et les solvants aromatiques.

-Exemple 4 :       Huile de Colza sulfurée

L'expérimentation de l'exemple 2 est reprise en utilisant uniquement l'huile de colza comme composé insaturé (212,6 g, soit 1 insaturation), 67,5 g de $S_2Cl_2$ (0,5 mole-gramme), 99 g tert-butylmercaptan (1,1 mole-gramme), 44 g de soude (1,1 mole-gramme) et 18,6 g de soufre (0,58 atome-gramme) ; dans cet essai le rapport molaire théorique HSR/S est égal à 1,9.
Après réaction puis traitements, on récupère 230 g d'huile jaune orangé dont la composition est la suivante:

$$S \% \text{ masse} = 20.9 \qquad Cl \quad = \quad 510 \text{ ppm}$$

$$\text{viscosité cinématique à } 100^{\circ}C \ (mm^2/s) \ = \ 24.7$$

$$\text{Couleur ASTM - NFT 60.104} \qquad = \quad 2.5$$

Soluble dans l'huile 100 neutral solvent et les solvants aromatiques.

- Exemple 5 :       Huile de Colza sulfurée

L'expérimentation de l'exemple 4 est reprise en utilisant 35.3 g de soufre en fleur (1.1 At-gramme) ; dans cet essai le rapport molaire théorique HSR/S est égal à 1.
Après réaction puis traitements, on récupère 230 g d'huile jaune orangée dont la composition est la suivante :

$$S \% \text{ masse} = 24{,}6 \qquad Cl \quad = \quad 480 \text{ ppm}$$

$$Na = 95 \text{ ppm}$$

$$\text{Viscosité cinématique à } 100^0C \ (mm^2/s) \quad = \quad 26{,}8$$

$$\text{Indice de saponification } (mg \ KOH/g) \quad = \quad 275{,}0$$

$$\text{Couleur NF T 60-104} \qquad = \quad 3$$

Soluble dans l'huile 100 neutral solvent et les solvants aromatiques.

-Exemple 6 :      Huile de Colza sulfurée

L'expérimentation de l'exemple 5 est reprise en utilisant 70,5 g de soufre en fleur (2,2 atome-gramme) ; dans cet essai le rapport molaire théorique HSR/S est égal à 0,5. Après réaction puis traitements, on récupère 245 g d'huile orangée dont la composition est la suivante :

$$S \% \text{ masse} = 27{,}0 \qquad Cl \quad = \quad 620 \text{ ppm}$$

$$Na = 127 \text{ ppm}$$

$$\text{Viscosité cinématique à } 100^0C \ (mm^2/s) \quad = \quad 31{,}9$$

$$\text{Couleur NF T 60-104} \qquad = \quad 5{,}5$$

Soluble dans l'huile 100 neutral solvent et les solvants aromatiques.

-Exemple 7:      Huile de Tournesol sulfurée

L'expérimentation de l'exemple 2 est reprise en utilisant 195,3 g d'huile de tournesol (dont l'indice d'iode est de 130, soit 1 insaturation), 67,5 g de $S_2Cl_2$ (0,5 mole-gramme), 99 g de tert-butylmercaptan (1,1 mole-gramme), 44 g de soude (1,1 mole-gramme) et 35,3 g de soufre (1,1 atome-gramme) dans cet essai le rapport molaire théorique HSR/S est égal à 1.
Après réaction, l'huile soufrée est diluée avec 150 cm³ d'hexane, puis elle est lavée avec 4 fois 150 cm³ d'eau saturée de $Na_2SO_4$. Après décantation, la phase organique est sèchée sur $Na_2SO_4$ anhydre, filtrée puis évaporée sous pression réduite pour éliminer le solvant ; on récupère 230 g d'huile jaune orangé dont la composition est la suivante :

$$S \% \text{ masse} = 26{,}2 \qquad Cl \quad = \quad 320 \text{ ppm}$$

$$Na = 535 \text{ ppm}$$

$$\text{Viscosité cinématique à } 100^0C \ (mm^2/s) \quad = \quad 15{,}7$$

$$\text{Couleur NF T 60-104} \qquad = \quad 4$$

Soluble dans l'huile 100 neutral solvent et les solvants aromatiques.

-Exemple 8 :      Huile de Poisson sulfurée

L'expérimentation de l'exemple 7 est reprise en utilisant 140,5 g d'huile de poisson (dont l'indice d'iode est de 180,7, soit 1 insaturation), 33,7 g de $S_2Cl_2$ (0,25 mole-gramme), 49,5 g tert-butylmercaptan (0,55 mole-gramme), 22 g de soude (0,55 mole-gramme) et 17,65 g de soufre (0,55 atome-gramme) ; dans cet essai le rapport molaire théorique HSR/S est égal à 1.
Après réaction puis traitement comme dans l'exemple 2, on recueille 195 g d'huile jaune orangé répondant

aux caractéristiques suivantes :

$$S \% \text{ masse} = 19,4 \qquad\qquad Cl \;=\; 450 \text{ ppm}$$

$$Na = 220 \text{ ppm}$$

$$\text{Viscosité cinématique à } 100^0C \; (\text{mm}^2/\text{s}) \;=\; 19,7$$

$$\text{Couleur NF T 60-104} \qquad\qquad =\; 3$$

Soluble dans les solvants aromatiques.

-Exemple 9 :     Ester méthylique d'huile de Colza sulfuré

Dans un réacteur de 1 l, muni d'un agitateur, d'un dispositif de mise au reflux et d'un système de chauffage, on dissout 38,7 g de soude en pastille (0,968 mole-gramme) dans 600 cm³ d'alcool méthylique anhydre puis, par l'intermédiaire d'un tube fritté plongeant dans la solution alcaline, on introduit 16,5 g d'$H_2S$ gazeux (0,484 mole-gramme). On ajoute ensuite 5,75 g de soufre en fleur (0,18 atome-gramme) et on chauffe le mélange sous agitation pendant 1 h pour former le polysulfure alcalin ; après dissolution complète, la solution alcaline est transfèrée dans une ampoule d'addition (dans cet essai le rapport molaire théorique $H_2S/S$ est égal à 2,7). Dans un second réacteur (de 2 l), muni d'un agitateur, d'un réfrigérant et d'un dispositif de chauffage, on introduit 222,5 g d'un ester méthylique d'huile de colza (soit environ 1 insaturation calculée à partir d'un indice d'iode de 114,1), on ajoute ensuite goutte à goutte 67,5 g de $S_2Cl_2$ (0,5 mole-gramme) en 1,5 heure en maintenant la température réactionnelle entre 25 et 30°C. Le composé ainsi obtenu renferme 13 % en masse de chlore et 11,6 % de soufre. La solution de polysulfure alcalin obtenue précédemment est alors ajoutée goutte à goutte en 2 h au mélange sulfo-halogéné, en maintenant une température réactionnelle comprise entre 40 et 45°C ; on laisse ensuite réagir le mélange agité pendant 24 h à 50°C.

La phase organique est diluée avec 500 cm³ de toluène, puis on ajoute 250 cm³ d'eau pour dissoudre le NaCl formé et l'excès de polysulfure, après agitation énergique pendant une demi-heure, on décante et on élimine la phase aqueuse. La phase organique est lavée avec 250 cm³ d'une solution aqueuse de $CO_3HNa$ à 10 % en masse, sèchée sur $Na_2SO_4$ anhydride, puis filtrée ; on distille ensuite le solvant à 100°C sous pression réduite.

On obtient ainsi 230 g d'une huile jaune orangé limpide dont les caractéristiques physico-chimiques sont les suivantes :

$$S \% \text{ masse} = 20,6 \qquad\qquad Cl \;=\; 350 \text{ ppm}$$

$$Na = 230 \text{ ppm}$$

$$\text{Viscosité cinématique à } 100^0C \; (\text{mm}^2/\text{s}) \;=\; 44,4$$

$$\text{Indice de saponification (mg KOH/g)} \;=\; 240,0$$

$$\text{Couleur NF T 60-104} \qquad\qquad =\; 3,5$$

Soluble dans les solvants aromatiques.
Odeur très faible, même après plusieurs mois de stockage.

-Exemple 10 :     Ester méthylique d'huile de Colza sulfuré

L'expérimentation 9 est reprise en faisant réagir dans un réacteur de 2 litres, 58,54 g de soude en pastilles (1,464 mole-gramme) en solution dans 910 cm³ de méthanol, 131,7 g de tert-butylmercaptan (1,464 mole-gramme) et 17,4 g de soufre en fleur (0,542 atome-gramme) ; dans cet exemple le rapport molaire théorique HSR/S est égale à 2,7).

L'expérimentation est poursuivie dans le second réacteur avec 348 g du même produit d'addition ester méthylique de colza.

Après réaction puis traitements, on récupère 400 g d'huile jaune orangé dont les caractéristiques sont les suivantes :

$$S \% \text{ masse} = 23,4 \qquad Cl \quad = \quad 675 \text{ ppm}$$

$$Na = 710 \text{ ppm}$$

$$\text{Viscosité cinématique à } 100^{\circ}C \ (\text{mm}^2/\text{s}) \quad = \quad 7,78$$

$$\text{Indice de saponification (mg KOH/g)} \quad = \quad 149,0$$

$$\text{Couleur NF T } 60\text{-}104 \qquad = \quad 2$$

Soluble dans les solvants aromatiques.
Odeur très faible, même après plusieurs mois de stockage.

-Exemple 11 :      Ester méthylique d'huile de Colza sulfuré

L'expérimentation 10 est reprise en faisant réagir dans un réacteur de 2 litres, 58,54 g de soude en pastilles (1,464 mole-gramme) en solution dans 910 cm³ de méthanol, 87,84 g de tert-butylmercaptan (0,976 mole-gramme), 16,62 g d'H₂S (0,488 mole-gramme) et 17,4 g de soufre en fleur (0,542 atome-gramme) ; dans cet exemple le rapport molaire théorique $(HSR + H_2S)/S$ est égal à 2,7.
L'expérimentation est poursuivie dans le second réacteur avec 348 g du même produit d'addition ester méthylique de colza.
Après réaction puis traitements, on récupère 300 g d'huile jaune orangé dont les caractéristiques sont les suivantes :

$$S \% \text{ masse} = 22,4 \qquad Cl \quad = \quad 500 \text{ ppm}$$

$$Na = 46 \text{ ppm}$$

$$\text{Viscosité cinématique à } 100^{\circ}C \ (\text{mm}^2/\text{s}) \quad = \quad 7,2$$

$$\text{Indice de saponification (mg KOH/g)} \quad = \quad 207,0$$

$$\text{Couleur NF T } 60\text{-}104 \qquad = \quad 1,5$$

Soluble dans les solvants aromatiques
Odeur très faible, même après plusieurs mois de stockage.

-Exemple 12 :      Mélange sulfuré Ester méthylique d'huile de Colza/isobutylène

Dans un réacteur de 1 l, muni d'un agitateur, d'un dispositif de mise en reflux et d'un système de chauffage, on dissout 90,7 g de soude en pastilles (2,27 mole-gramme) dans 600 cm³ d'alcool méthylique anhydre puis, par l'intermédiaire d'un tube terminé par un verre fritté, on ajoute 38,7 g d'H₂S (1,14 mole-gramme) en 0,5 h. Après réaction on ajoute 13,5 g de soufre en fleur (0,42 atome-gramme) et on chauffe le mélange agité pendant 1 h pour former le polysulfure alcalin (dans cet essai le rapport molaire théorique $H_2S/S$ est égal à 2,7) ; le mélange ainsi obtenu est transféré dans une ampoule d'addition.
Dans un second réacteur de 2 l on fait réagir 100 g d'ester méthylique de colza (0,45 insaturation), 100 g d'isobutylène (1,79 insaturation) et 150 g de $S_2Cl_2$ (1,11 mole-gramme). Le produit obtenu (Cl = 20 % en masse, S = 19 % environ) est dilué avec 18,25 g de n-chlorobutane. Dans ce mélange la proportion de chlore présente sous forme de n-chlorobutane est d'environ 8 % en masse par rapport au chlore total.
La solution de polysulfure alcalin obtenue précédemment est alors ajoutée goutte à goutte en 2 h au mélange sulfo-halogéné, en maintenant une température réactionnelle voisine de 0°C ; on laisse ensuite réagir le mélange agité pendant 24 h à 50°C.
La phase organique est diluée avec 500 cm³ de toluène, puis on ajoute 250 cm³ d'eau pour dissoudre le NaCl formé et l'excès de polysulfure ; après agitation énergique pendant une demi-heure, on décante et on élimine la phase aqueuse. La phase organique est lavée avec 250 cm³ d'une solution aqueuse de $CO_3HNa$ à 10 % en masse pendant 3 h à 75°C, séchée sur $Na_2SO_4$ anhydre, puis filtrée ; on distille ensuite le solvant à 100°C sous pression réduite.
On obtient ainsi 220 g d'une huile jaune orangé limpide dont les caractéristiques physico-chimiques sont les

suivantes :

$$S \% \text{ masse} = 38{,}5 \qquad \qquad Cl \quad = \quad 610 \text{ ppm}$$

$$Na = 18 \text{ ppm}$$

$$\text{Viscosité cinématique à } 100^{0}C \ (mm^2/s) \quad = \quad 25{,}0$$

$$\text{Indice de saponification (mg KOH/g)} \quad = \quad 280{,}0$$

$$\text{Couleur NF T 60-104} \qquad \qquad = \quad 3$$

Soluble dans l'huile 100 neutral solvent et les solvants aromatiques.
Odeur très faible, même après plusieurs mois de stockage.

-Exemple 13 : Mélange sulfuré Ester méthylique d'huile de Colza/huile de Ricin

Dans un réacteur de 1 l, muni d'un agitateur, d'un dispositif de mise au reflux et d'un système de chauffage, on dissout 35,93 g de soude en pastilles (0,898 mole-gramme) dans 400 cm$^3$ d'alcool méthylique anhydre puis on ajoute 80,85 g de tert-butylmercaptan (0,898 mle-gramme) et 10,7 g de soufre en fleur (0,3334 atome-gramme). On chauffe le mélange agité pendant 1 h pour former le polysulfure alcalin puis on le transfère dans une ampoule d'addition (dans cet essai le rapport molaire théorique HSR/S est égal à 2,7).

Dans un second réacteur de 1 l on fait réagir 125 g d'ester méthylique de colza (0,56 insaturation), 125 g d'huile de ricin (0,35 insaturation) et 55 g de $S_2Cl_2$ (0,408 mole-gramme) entre 20 et 25°C.

La solution de polysulfure alcalin obtenue précédemment est alors ajoutée goutte à goutte en 2 h au mélange sulfo-halogèné, en maintenant une température réactionnelle voisine de 25°C ; on laisse ensuite réagir le mélange agité pendant 24 h à 50°C.

La phase organique est diluée avec 500 cm$^3$ de toluène, puis on ajoute 250 cm$^3$ d'eau pour dissoudre le NaCl formé et l'excès de polysulfure, après agitation énergique pendant une demi-heure, on décante et on élimine la phase aqueuse. La phase organique est lavée avec 250 cm$^3$ d'une solution aqueuse de $CO_3HNa$ à 10 en masse pendant 3 h à 75°C, sèchée sur $Na_2SO_4$ anhydre, puis filtrée ; on distille ensuite le solvant à 100°C sous pression réduite.

On obtient ainsi 300 g d'une huile jaune orangé limpide dont les caractéristiques physico-chimiques sont les suivantes :

$$S \% \text{ masse} = 14{,}9 \qquad \qquad Cl \quad = \quad 500 \text{ ppm}$$

$$Na = 155 \text{ ppm}$$

$$\text{Indice de saponification (mg KOH/g)} \quad = \quad 148{,}0$$

$$\text{Couleur NF T 60-104} \qquad \qquad = \quad 1{,}5$$

Soluble dans les solvants aromatiques.
Odeur très faible, même après plusieurs mois de stockage.

-Exemple 14 : Mesure de l'activité corrosive des additifs selon l'invention

On a réalisé des essais de corrosion à la lame de cuivre selon la norme ASTM D 130 (NF M 07-015) ; les formulations étudiées étaient constituées d'une huile minérale 100 neutral solvent dans laquelle on a dissout des quantités d'additifs de l'invention telles que la teneur en soufre de ces formulations, due à ces additifs, soit égale à 2 % en masse.

Les résultats obtenus sont rassemblés dans le tableau 1. Ils sont exprimés par une cotation comprenant un nombre (de 1 à 4), ce nombre étant suivi d'une lettre précisant la nuance de la corrosion de la lame de cuivre.

EP 0 410 849 B1

Tabelau 1

| Additif | (S) | 3 heures à | |
|---|---|---|---|
| | dans l'additif | 100°C | 121°C |
| l'exemple | % masse | | |
| 4 | 20,9 | 4b | 4b |
| 5 | 24,6 | 4a - 4b | 4b |
| 10 | 23,4 | 1a | 2c - 3b |
| 11 | 22,4 | 2c | 4b |

-Exemple 15 : Evaluation des propriétés extrême-pression des additifs selon l'invention

On a réalisé des essais mettant en évidence les propriétés extrême-pression des additifs préparés selon les exemples 4,10 et 11 de l'invention, au moyen d'une machine 4 billes selon l'ASTM D 2783.

La formulation lubrifiante étudiée est constituée d'une huile minérale SAE 80W90, raffinée aux solvants, dans laquelle on a dissout des quantités d'additifs de l'invention telles que la teneur en soufre de l'huile, due à ces additifs, soit égale à 2 % en masse. Les résultats rassemblés dans le tableau 2, montrent que les additifs de l'invention peuvent être utilement employés pour la formulation des huiles de travail des métaux.

TABLEAU 2

| Additif | Indice | | Charge de | | $\phi$ d'empreinte des billes | | |
|---|---|---|---|---|---|---|---|
| de l' | charge-usure | | soudure | | 1 heure sous une charge de | | |
| exemple | (kgf) | (N) | (kgf) | (N) | 40 kgf | 60 kgf | 80 kgf |
| | | | | | 392,4 N | 588,6 N | 784,8 N |
| 80W90 | 28,0 | 274,7 | 160 | 1569,6 | 1,47 | 1,90 | 2,50 |
| 4 | 98,0 | 961,4 | 620 | 6082,2 | 0,67 | 0,90 | 1,65 |
| 10 | 75,3 | 738,7 | 500 | 4905,0 | 0,68 | 1,00 | 1,15 |
| 11 | 83,4 | 818,1 | 550 | 5395,5 | 0,71 | 0,85 | 1,00 |

## Revendications

1. Composition polysulfurée, riche en soufre, peu colorée, stable, renfermant une teneur en chlore résiduel très faible, caractérisée en ce qu'elle est préparée par un procédé qui comprend :
   - une étape (1) dans laquelle on fait réagir au moins une substance choisie dans le groupe constitué par les corps gras insaturés d'origine végétale ou animale, les esters d'acides carboxyliques mono ou polyinsaturés dérivant d'au moins un acide carboxylique mono ou polyinsaturé contenant jusqu'à environ 26 atomes de carbone par molécule et d'au moins un alcool primaire ou secondaire, ramifié ou linéaire, d'origine naturelle ou synthétique, contenant environ 1 à 20 atomes de carbone par molécule, en présence ou en l'absence d'au moins une monooléfine aliphatique comportant 2 à 36 atomes de carbone par molécule, avec une ou plusieurs fractions d'au moins un composé choisi parmi le monochlorure et le dichlorure de soufre, formant ainsi un adduct,
   - une étape (2) dans laquelle on fait réagir, au moins un réactif choisi dans le groupe constitué par l'hydrogène sulfuré et les mercaptans, avec au moins un hydroxyde de métal alcalin ou d'ammonium, en solution dans au moins un monoalcool aliphatique substantiellement anhydre renfermant 1 à 4 atomes de carbone par molécule,

- une étape (3) dans laquelle on met en contact ledit adduct obtenu à l'étape (1) avec, en une ou plusieurs fractions, la solution alcoolique obtenue à l'issue de l'étape (2),
- une étape (4) dans laquelle on chauffe le mélange résultant, on élimine le monoalcool par distillation, tout en ajoutant un volume d'eau suffisant pour maintenir en solution les produits minéraux formés au cours de la réaction, et les éventuels réactifs sulfurés en excès ;
- une étape (5) dans laquelle après décantation, on élimine la phase aqueuse et on récupère la composition polysulfurée constituant la phase organique.

2. Composition polysulfurée selon la revendication 1, caractérisée en ce que son procédé de préparation comprend en outre une étape (6) dans laquelle on met en contact ladite composition polysulfurée obtenue à l'issue de l'étape (5) avec un composé faiblement basique et on le lave à l'eau.

3. Composition polysulfurée selon l'une des revendications précédentes, caractérisée en ce que la proportion de ladite substance et éventuellement de ladite monooléfine est de 0,2 à 2,5 insaturations par molegramme de monochlorure et/ou de dichlorure de soufre.

4. Composition polysulfurée selon l'une des revendications 1 à 3, caractérisée en ce que, dans l'ensemble des réactifs utilisés, ladite substance choisie parmi les corps gras insaturés et les esters d'alkyle d'acides carboxyliques (poly)insaturés représentent une proportion, exprimée en insaturations éthyléniques, allant de 1 à 100 % et lesdites monooléfines aliphatiques représentent une proportion allant de 0 à 99 %.

5. Composition polysulfurée selon la revendication 4, caractérisée en ce que la proportion de ladite substance est de 10 à 100 % et la proportion de ladite monooléfine aliphatique de 0 à 90 %, exprimées en insaturations éthyléniques.

6. Composition polysulfurée selon l'une des revendications 1 à 5, caractérisée en ce que, dans l'étape (1), on opère à une température de 20 à 80°C, dans l'étape (2), on opère à une température de 20 à 80°C et dans l'étape (3), on opère à une température de 20 à 70°C.

7. Composition polysulfurée selon l'une des revendications 1 à 6, caractérisée en ce que, dans l'étape (2), on met en jeu de 0,01 à 1 mole-gramme d'hydrogène sulfuré, de 0,01 à 1 mole-gramme de mercaptan et de 0 à 3,6 atomes-gramme de soufre élémentaire par mole-gramme d'hydroxyde de métal alcalin ou d'ammonium.

8. Composition polysulfurée selon l'une des revendications 1 à 7, caractérisée en ce que, dans l'étape (2), on met en jeu de 100 à 1000 cm³ de monoalcool aliphatique substantiellement anhydre par mole-gramme d'hydroxyde de métal alcalin ou d'ammonium.

9. Composition polysulfurée selon l'une des revendications 1 à 8, caractérisée en ce que, dans l'étape (3), ledit adduct est mis en jeu en une proportion correspondant à 0,5-1 atome-gramme d'halogène par molegramme d'hydroxyde mis en jeu dans l'étape (2).

10. Composition polysulfurée selon l'une des revendications 1 à 9, caractérisée en ce que, dans l'étape (3), outre ledit adduct, on met en jeu au moins un composé hydrocarboné monohalogéné en une proportion de 1 à 70 % en atomes-gramme d'halogène par rapport au nombre total d'atomes-gramme d'halogène de l'ensemble adduct + composé hydrocarboné monohalogéné.

11. Composition polysulfurée selon l'une des revendications 1 à 10, caractérisée en ce que dans l'étape (4), le mélange issue de l'étape (3) est chauffé à une température de 40 à 70°C.

12. Composition polysulfurée selon l'une des revendications 1 à 11, caractérisée en ce que, à l'issue de l'étape (4), on ajoute un solvant hydrocarboné, qui est ensuite éliminé par distillation au cours de l'étape (5).

13. Composition polysulfurée selon l'une des revendications 1 à 12, caractérisée en ce qu'elle présente une teneur en soufre de 5 à 55 % en masse et une teneur en chlore résiduel inférieur à 0,1 % en masse.

14. Huile lubrifiante caractérisée en ce qu'elle comprend une proportion majeure d'une huile de base minérale

EP 0 410 849 B1

ou synthétique et de 0,1 à 20 % en masse d'au moins une composition polysulfurée selon l'une des revendications 1 à 13.

**Patentansprüche**

1.  Polysulfurierte Zusammensetzung, die reich an Schwefel, wenig gefärbt und stabil ist und einen sehr geringen Restgehalt an Chlor aufweist, dadurch gekennzeichnet, daß sie hergestellt worden ist nach einem Verfahren, das umfaßt:
    - eine Stufe (1), in der man mindestens eine Substanz, ausgewählt aus der Gruppe, die besteht aus ungesättigten Fettkörpern pflanzlichen oder tierischen Ursprungs, einfach oder mehrfach ungesättigten Carbonsäureestern, abgeleitet von mindestens einer einfach oder mehrfach ungesättigten Carbonsäure mit bis zu etwa 26 Kohlenstoffatomen pro Molekül und mindestens einem verzweigten oder linearen, primären oder sekundären Alkohol natürlichen oder synthetischen Ursprungs mit etwa 1 bis 20 Kohlenstoffatomen pro Molekül, in Gegenwart oder Abwesenheit mindestens eines aliphatischen Monoolefins mit 2 bis 36 Kohlenstoffatomen pro Molekül reagieren läßt mit einer oder mehreren Fraktionen mindestens einer Verbindung, ausgewählt aus Schwefelmonochlorid und Schwefeldichlorid, unter Bildung eines Addukts,
    - eine Stufe (2), in der man mindestens ein Reagens, ausgewählt aus der Gruppe, die besteht aus Schwefelwasserstoff und Mercaptanen, reagieren läßt mit mindestens einem Alkalimetallhydroxid oder Ammoniumhydroxid, gelöst in mindestens einem praktisch wasserfreien aliphatischen Monoalkohol mit 1 bis 4 Kohlenstoffatomen pro Molekül,
    - eine Stufe (3), in der man das in der Stufe (1) erhaltene Addukt in einer oder mehreren Fraktionen mit der am Ende der Stufe (2) erhaltenen alkoholischen Lösung in Kontakt bringt,
    - eine Stufe (4), in der man die resultierende Mischung erwärmt, den Monoalkohol durch Destillation entfernt unter gleichzeitiger Zugabe eines ausreichenden Volumens an Wasser, um die im Verlaufe der Reaktion gebildeten mineralischen Produkte und die gegebenenfalls im Überschuß vorhandenen sulfurierten Reagentien in Lösung zu halten, und
    - eine Stufe (5), in der man nach dem Dekantieren die wäßrige Phase eliminiert und die polysulfurierte Zusammensetzung, welche die organische Phase darstellt, abtrennt.

2.  Polysulfurierte Zusammensetzung nach Anspruch 1, dadurch gekennzeichnet, daß das Verfahren zu seiner Herstellung außerdem umfaßt
    - eine Stufe (6), in der man die genannte, am Ende der Stufe (5) erhaltene polysulfurierte Zusammensetzung mit einer schwach basischen Verbindung in Kontakt bringt und sie mit Wasser wäscht.

3.  Polysulfurierte Zusammensetzung nach einem der vorhergehenden Ansprüche, dadurch gekennzeichnet, daß der Mengenanteil der genannten Substanz und gegebenenfalls des genannten Monoolefins 0,2 bis 2,5 Unsättigungen pro g-mol Schwefelmonochlorid und/oder Schwefeldichlorid entspricht.

4.  Polysulfurierte Zusammensetzung nach einem der Ansprüche 1 bis 3, dadurch gekennzeichnet, daß in der Gesamtheit der verwendeten Reagentien die genannte Substanz, die ausgewählt wird aus den ungesättigten Fettkörpern und den (mehrfach) ungesättigten Carbonsäurealkylestern, einen Mengenanteil, ausgedrückt in ethylenischen Unsättigungen, darstellt, der zwischen 1 und 100 % liegt, und die genannten aliphatischen Monoolefine einen Mengenanteil darstellen, der zwischen 0 und 99 % liegt.

5.  Polysulfurierte Zusammensetzung nach Anspruch 4, dadurch gekennzeichnet, daß der Mengenanteil der genannten Substanz 10 bis 100 % beträgt und daß der Mengenanteil des genannten aliphatischen Monoolefins 0 bis 90 % beträgt, jeweils ausgedrückt als ethylenische Unsättigungen.

6.  Polysulfurierte Zusammensetzung nach einem der Ansprüche 1 bis 5, dadurch gekennzeichnet, daß man in der Stufe (1) bei einer Temperatur von 20 bis 80°C, in der Stufe (2) bei einer Temperatur von 20 bis 80°C und in der Stufe (3) bei einer Temperatur von 20 bis 70°C arbeitet.

7.  Polysulfurierte Zusammensetzung nach einem der Ansprüche 1 bis 6, dadurch gekennzeichnet, daß man in der Stufe (2) 0,01 bis 1 g-mol Schwefelwasserstoff, 0,01 bis 1 g-mol Mercaptan und 0 bis 3,6 g-Atom elementaren Schwefel pro g-mol Alkalimetallhydroxid oder Ammoniumhydroxid einsetzt.

8.  Polysulfurierte Zusammensetzung nach einem der Ansprüche 1 bis 7, dadurch gekennzeichnet, daß man in der Stufe (2) 100 bis 1000 cm³ eines praktisch wasserfreien aliphatischen Monoalkohols pro g-mol Alkalimetallhydroxid oder Ammoniumhydroxid einsetzt.

9. Polysulfurierte Zusammensetzung nach einem der Ansprüche 1 bis 8, dadurch gekennzeichnet, daß man in der Stufe (3) das genannte Addukt in einem Mengenanteil einsetzt, der 0,5 bis 1 g-Atom Halogen pro g-mol Hydroxid, das in der Stufe (2) eingesetzt worden ist, entspricht.

10. Polysulfurierte Zusammensetzung nach einem der Ansprüche 1 bis 9, dadurch gekennzeichnet, daß man in der Stufe (3) außer dem genannten Addukt mindestens eine monohalogenierte Kohlenwasserstoffverbindung in einem Mengenanteil von 1 bis 70 g-Atom Halogen einsetzt, bezogen auf die Gesamtanzahl der g-Atome Halogen in der Gesamtheit aus Addukt und monohalogenierter Kohlenwasserstoffverbindung.

11. Polysulfurierte Zusammensetzung nach einem der Ansprüche 1 bis 10, dadurch gekennzeichnet, daß die am Ende der Stufe (3) erhaltene Mischung in der Stufe (4) auf eine Temperatur von 40 bis 70°C erwärmt wird.

12. Polysulfurierte Zusammensetzung nach einem der Ansprüche 1 bis 11, dadurch gekennzeichnet, daß man am Ende der Stufe (4) ein Kohlenwasserstoff-Lösungsmittel zugibt, das anschließend im Verlaufe der Stufe (5) durch Destillation entfernt wird.

13. Polysulfurierte Zusammensetzung nach einem der Ansprüche 1 bis 12, dadurch gekennzeichnet, daß sie einen Schwefelgehalt von 5 bis 55 Massenprozent und einen Gehalt an restlichem Chlor von weniger als 0,1 Massenprozent aufweist.

14. Schmieröl, dadurch gekennzeichnet, daß es einen größeren Mengenanteil eines mineralischen oder synthetischen Grundöls und 0,1 bis 20 Massenprozent mindestens einer polysulfurierten Zusammensetzung nach einem der Ansprüche 1 bis 13 enthält (umfaßt).

## Claims

1. Sulphur-rich, slightly coloured, stable polysulphurized composition with a very low residual chlorine content, characterized in that it is prepared by a process comprising a stage (1) in which reaction takes place of at least one substance chosen from the group consituted by unsaturated fatty substances, of vegetable or animal origin, monounsaturated or polyunsaturated carboxylic acid esters derived from at least one monounsaturated or polyunsaturated carboxylic acid containing up to approximately 26 carbon atoms per molecule and at least one primary or secondary, straight or branched, natural or synthetic alcohol containing approximately 1 to 20 carbon atoms per molecule, in the presence or absence of at least one aliphatic monoolefin having 2 to 36 carbon atoms per molecule, with one or more fractions of at least one compound chosen from among sulphur monochloride and dichloride, thus forming an adduct; a stage (2) in which reaction takes place of at least one reagent chosen from the group constituted by hydrogen sulphide and mercaptans, with at least one alkali metal or ammonium hydroxide, dissolved in at least one substantially anhydrous aliphatic monoalcohol containing 1 to 4 carbon atoms per molecule; a stage (3) in which contacting takes place between the adduct obtained in stage (1) with, in one or more fractions, the alcoholic solution obtained in stage (2); a stage (4) in which the resultant mixture is heated, the monoalcohol eliminated by distillation, whilst added a water volume adequate for maintaining the mineral products formed during the reaction in solution, and the possible excess sulphurized reagents; and a stage (5) in which, after settling, the aqueous phase is eliminated and the polysulphurized composition constituting the organic phase is recovered.

2. Polysulphurized composition according to claim 1, characterized in that its preparation process also comprises a stage (6) in which the polysulphurized composition obtained in stage (5) is contacted with a slightly basic compound and it is washed with water.

3. Polysulphurized composition according to one of the preceding claims characterized in that the proportion of said substance and optionally said monoolefin is 0.2 to 2.5 unsaturations per gramme molecule of sulphur monochloride and/or dichloride.

4. Polysulphurized composition according to one of the claims 1 to 3, characterized in that, all the reagents used, said substance chosen from among unsaturated fatty substances and (poly)unsaturated carboxylic acid alkyl esters represents a proportion, expressed in ethylene unsaturations, from 1 to 100% and said aliphatic monoolefins represent a proportion from 0 to 99%.

5. Polysulphurized composition according to claim 4, characterized in that the proportion of said substance is 10 to 100% and the proportion of said aliphatic monoolefin 0 to 90%, expressed in ethylene unsaturations.

6. Polysulphurized composition according to one of the claims 1 to 5, characterized in that, in stage (1), working takes place at a temperature of 20 to 80°C , in stage (2) at 20 to 80°C and in stage (3) at 20 to 70°C.

7. Polysulphurized composition according to one of the claims 1 to 6, characterized in that, in stage (2), use is made of 0.01 to 1 gramme molecule of hydrogen sulphide, 0.01 to 1 gramme molecule of mercaptan and 0 to 3.6 gramme atoms of elementary sulphur per gramme molecule of ammonium or alkali metal hydroxide.

8. Polysulphurized composition according to one of the claims 1 to 7, characterized in that, in stage (2), use is made of 100 to 1000 cm$^3$ of substantially anhydrous aliphatic monoalcohol per gramme molecule of ammonium or alkali metal hydroxide.

9. Polysulphurized composition according to one of the claims 1 to 8, characterized in that, in stage (3), said adduct is used in a proportion corresponding to 0.5 to 1 gramme atom of halogen per gramme molecule of hydroxide used in stage (2).

10. Polysulphurized composition according to one of the claims 1 to 9, characterized in that, in stage (3), apart from said adduct, use is made of at least one monohalogenated hydrocarbon compound in a proportion of 1 to 70% gramme atoms of halogen based on the total number of gramme atoms of halogen of the adduct and monohalogenated hydrocarbon compound together.

11. Polysulphurized composition according to one of the claims 1 to 10, characterized in that, in stage (4), the mixture of stage (3) is heated to a temperature of 40 to 70°C.

12. Polysulphurized composition according to one of the claims 1 to 11, characterized in that, following stage (4), a hydrocarbon solvent is added and is then eliminated by distillation during stage (5).

13. Polysulphurized composition according to one of the claims 1 to 12 characterized in that it has a sulphur content of 5 to 55% by weight and a residual chlorine content below 0.1% by weight.

14. Lubricating oil, characterized in that it comprises a major proportion of a mineral or synthetic based oil and 0.1 to 20% by weight of at least one polysulphurized composition according to one of the claims 1 to 13.